# EUROPÄISCHE PATENTSCHRIFT

(11) **EP 2 758 353 B1**
(45) Veröffentlichungstag und Bekanntmachung des Hinweises auf die Patenterteilung: **21.08.2019**
(21) Anmeldenummer: 12762273.6
(22) Anmeldetag: 19.09.2012
(51) Int. Cl.: C04B 26/06, C04B 26/18

(54) **POLYMERBETONGEMISCH, POLYMERBETONTEIL UND VERFAHREN ZU DESSEN HERSTELLUNG**
POLYMER-CONCRETE MIXTURE, POLYMER-CONCRETE PART, AND METHOD FOR THE PRODUCTION THEREOF
MÉLANGE DE BÉTON POLYMÈRE, ÉLÉMENT EN BÉTON POLYMÈRE ET PROCÉDÉ DE FABRICATION

(30) Priorität: 20.09.2011 DE 102011083073
(43) Veröffentlichungstag der Anmeldung: 30.07.2014
(73) Patentinhaber: Polycare Research Technology GmbH & Co. KG, 98559 Gehlberg (DE)
(72) Erfinder: PLÖTNER, Gunther, 99310 Arnstadt (DE)
(74) Vertreter: Liedtke, Markus
(86) Internationale Anmeldenummer: PCT/EP2012/068445
(87) Internationale Veröffentlichungsnummer: WO 2013/041570

(56) Entgegenhaltungen:
- WO-A1-00/17114
- WO-A1-2009/071038
- GB-A- 2 460 707
- JP-A- 2003 040 663
- US-A- 4 012 231
- US-A- 6 017 595
- KIDAI, T.: "Manufacture of gateposts and other building materials from wastes", CHEMICAL ABSTRACTS, Bd. 114, Nr. 22, 3. Juni 1991 (1991-06-03) , Seite 362, XP000187724, ISSN: 0009-2258

## Beschreibung

Die Erfindung betrifft ein Polymerbetongemisch gemäß dem Oberbegriff des Anspruchs 1. Weiterhin betrifft die Erfindung ein Verfahren zur Herstellung eines Polymerbetonteils gemäß dem Oberbegriff des Anspruchs 4 und ein Polymerbetonteil gemäß dem Oberbegriff des Anspruchs 11.

Herkömmlicher Polymerbeton umfasst ein Polymer als Bindemittel mit einem meist mineralischen Füllstoff, der durch das Bindemittel zusammengehalten wird. Polymerbeton weist eine geringere Erhärtungszeit (auch Topfzeit genannt) und eine geringere Dichte als rein mineralischer Beton und eine bessere Schwingungsdämpfung auf.

Aus der WO 2009/071038 A1 ist ein Polymerbeton mit zermahltem Gestein jedweder Art sowie mit Schadstoffen und/oder organischen Bestandteilen versetzter Sand bekannt. Als Grundbaustein gelten folgende Mengenverhältnisse: 76,5 - 83,5% Füllstoff, 16,0 - 20,0% Harz/Bindemittel, 0,2 - 2,0% Härter, 0,2 - 1,5% Beschleuniger. Die Herstellung erfolgt in einem herkömmlichen Mischer, wobei erst der Füllstoff und das Bindemittel intensiv vermischt werden und dann die Zugabe der chemischen Zusätze, unter weiterer Vermischung, erfolgt. Anschließend wird der Compound in die Formen gegossen, gemäß der geforderten Dichte gerüttelt und entformt. Je nach Rezeptur liegt die Taktzeit zwischen 6 und 120 Minuten. Der somit geschaffene Polymerbeton ist geeignet für die Herstellung von Baumaterial wie Platten, Steine, Pfeiler, Rohre, individuelle Formteile etc. sowie Gebrauchsgüter aller Art, z.B. im Garten-, Küchen- und Badbereich oder für Deko- Elemente.

In der JP 2003-40663 A werden Kunstmarmorprodukte und deren Herstellung beschrieben. Es wird ein Harzbeschichtungsmittel in eine Form eingebracht. Nachdem das Beschichtungsmittel gehärtet ist, wird eine Mischung aus Flugasche, Harz, Titandioxid, einem Farbmittel und Härter in die Form eingebracht, um eine erste Schicht auszubilden. Nachdem eine Zwischenschicht gebildet wurde, wird eine Mischung aus Flugasche, Harz, Farbmittel und Härter auf die Zwischenschicht aufgebracht, um eine zweite Schicht zu bilden.

Aus der WO 00/17114 ist ein Verfahren zum Stabilisieren und Verfestigen von Schlamm aus Kläranlagen bekannt. Im Verfahren werden dem Schlamm, der 3 bis 30 Volumenprozent trockene Partikel aufweist, Calciumoxid oder Kalkoxid und Hauptbestandteile eines wärmehärtbaren Harzes zugesetzt, wie z. B. Aminoharz oder Phenoplast. Die zugesetzte Menge des Calciumoxids oder Kalkoxids liegt zwischen 5 und 20 Volumenprozent des behandelten Schlamms und ist im Wesentlichen umgekehrt proportional zum Wassergehalt des Schlamms. Die zugesetzte Menge der Hauptbestandteile des wärmehärtenden Harzes liegt zwischen 5 und 40 Volumenprozent, bezogen auf das Volumen des zu behandelnden Schlamms.

In der GB 2460707 A wird ein Polymerbetonzuschlag beschrieben, welcher Quarzsand umfasst.

Der Erfindung liegt die Aufgabe zu Grunde, ein gegenüber dem Stand der Technik verbessertes Polymerbetongemisch, ein verbessertes Verfahren zur Herstellung eines Polymerbetonteils und ein verbessertes Polymerbetonteil anzugeben.

Die Aufgabe wird hinsichtlich des Polymerbetongemischs erfindungsgemäß durch die im Anspruch 1 angegebenen Merkmale gelöst. Die Aufgabe wird hinsichtlich des Verfahrens erfindungsgemäß durch die im Anspruch 4 angegebenen Merkmale gelöst. Die Aufgabe wird hinsichtlich des Polymerbetonteils erfindungsgemäß durch die im Anspruch 11 angegebenen Merkmale gelöst.

Vorteilhafte Ausgestaltungen der Erfindung sind Gegenstand der Unteransprüche.

Ein erfindungsgemäßes Polymerbetongemisch zur Herstellung eines Polymerbetonteils besteht aus 78 bis 82 Volumenprozent eines Füllstoffgemischs und 18 bis 22 Volumenprozent eines Harzgemisches aus zumindest einem Harz, einem Härter oder Härtergemisch und einem Beschleuniger oder Beschleunigergemisch. Dabei beträgt der Anteil des Härters oder Härtergemischs, bezogen auf den Harzanteil, 1,5 bis 2 Volumenprozent, und der Anteil des Beschleunigers oder Beschleunigergemischs, bezogen auf den Harzanteil, beträgt 0,8 bis 1,4 Volumenprozent. D. h. das Harzgemisch aus dem zumindest einen Harz, dem Härter oder Härtergemisch und dem Beschleuniger oder Beschleunigergemisch weist 1,5 bis 2 Volumenprozent des Härters oder Härtergemischs, 0.8 bis 1,4 Volumenprozent des Beschleunigers oder Beschleunigergemischs und entsprechend 96,6 bis 97,7 Volumenprozent Harz auf.

Das Füllstoffgemisch umfasst getrockneten Klärschlamm. Dabei sind unter getrocknetem Klärschlamm Feststoffbestandteile des Klärschlamms zu verstehen, welche nach einer vollständigen Trocknung des Klärschlamms verbleiben. Somit kann vorteilhafterweise ein herkömmlicherweise aufwendig zu entsorgender Klärschlamm einer Verwendung zugeführt werden, d. h. der Klärschlamm wird zur Herstellung des Polymerbetongemischs und zur Herstellung eines Polymerbetonteils mittels dieses Polymerbetongemischs verwendet. Dadurch entfällt eine aufwendige Aufarbeitung oder chemische Behandlung des Klärschlamms und es ist ein besonders einfach herzustellender Polymerbeton ermöglicht, welcher eine hohe Festigkeit, ein hohes Elastizitätsmodul, eine große chemische und/oder mechanische Widerstandsfähigkeit und/oder -beständigkeit, eine hohe Abriebfestigkeit und keine Wasseraufnahme oder zumindest eine gegen Null gehende Wasseraufnahme aufweist. Dadurch sind mittels dieses Polymerbetongemischs hergestellte Polymerbetonteile beispielsweise auch in Überschwemmungsgebieten sehr vorteilhaft einsetzbar. Weiterhin ist der mittels des erfindungsgemäßen Polymerbetongemischs herzustellende Polymerbeton besonders korrosions-, alterungs- und witterungsbeständig und nahezu schwundfrei.

Des Weiteren ist durch den Einsatz von getrocknetem Klärschlamm aufgrund dessen Struktur eine Schalldämmung und Wärmeisolierung des Polymerbetons bzw. des daraus hergestellten Polymerbetonteils verbessert, denn aufgrund der Struktur einzelner Partikel des Klärschlamms, welche hohlkörperförmig ausgebildet sind, zum Beispiel röhrenförmig, beispielsweise ähnlich Hanfstengeln, ergibt sich im Polymerbeton ein Gefüge, welches wärme- und schallisolierend wirkt. Zudem weist ein aus dem mittels getrocknetem Klärschlamm hergestellten Polymerbeton ausgebildetes Polymerbetonteil ein geringeres Gewicht auf als ein nur mit Quarzsand als Füllstoff hergestelltes Polymerbetonteil. Dies hat beispielsweise Vorteile beim Transport sowie bei der Verarbeitung der Polymerbetonteile, da zum Beispiel keine schweren Maschinen zu deren Transport und Verarbeitung erforderlich sind und beispielsweise bei mittels der Polymerbetonteile herzustellenden Gebäuden oder Gebäudebestandteilen Grundmauern, Bodenplatten und Abstützungen erheblich geringer ausgebildet werden können.

Dabei wird unter der Bezeichnung Klärschlamm herkömmlicher Klärschlamm verstanden, welcher bei der Reinigung verschmutzten Wassers jedweder Art anfällt und eine Mischung aus Wasser und Feststoffen ist. Bei den Feststoffen handelt es sich um Schwebstoffe, Schwermetalle und Gifte, die sich beispielsweise in der Kläranlage aus dem Wasser absetzen und zu Boden sinken, d. h. sedimentieren, bzw. durch mechanische Reinigungsstufen als Primärschlamm anfallen. Dabei sind die Schwebstoffe herkömmlichen Abwassers zu einem überwiegenden Anteil aus Fäkalien und häuslichen/kommunalen Abfällen gebildet, so dass ein solcher Klärschlamm zu einem großen Teil aus derartigen Fäkalien und Abfällen besteht, in denen beispielsweise auch Medikamentenrückstände enthalten sind. Aus diesem Grund ist Klärschlamm giftig und als Sondermüll klassifiziert. In einem typischen Klärschlamm sind beispielsweise folgende Stoffe enthalten: Blei, Kupfer, Nickel, Chrom, Cadmium, Zink, Arsen, Quecksilber, Mangan, Aluminium, Eisen, Stickstoff und/oder Phosphor. Organische Schadstoffe im Klärschlamm können beispielsweise kanzerogen, mutagen und/oder giftig sein.

Dieser Klärschlamm ist, wie oben bereits beschrieben, zu trocknen, so dass die getrockneten Feststoffe des Klärschlamms für das erfindungsgemäße Polymerbetongemisch zu verwenden sind.

Im Gegensatz zu den oben beschriebenen Stoffen, welche im Klärschlamm enthalten sind oder enthalten sein können, weist aus dem Stand der Technik bekannter, mit Schadstoffen und/oder organischen Bestandteilen versetzter Sand eine derartige Zusammensetzung nicht auf, sondern lediglich organische Bestandteile auf pflanzlicher Basis und insbesondere keine Fäkalien, keine häuslichen/kommunalen Abfällen, keine Medikamentenrückstände, keine Schwermetalle und keine kanzerogen, mutagen und/oder giftig wirkenden Stoffe. Daher erfordert eine Verarbeitung von Klärschlamm eine andere Verarbeitungsweise und insbesondere eine andere Zusammensetzung und ein anderes Mischungsverhältnis des Harzgemisches aus dem zumindest einem Harz, dem Härter oder Härtergemisch und dem Beschleuniger oder Beschleunigergemisch. Durch die Kombination des zumindest einen Harzes mit dem Härter oder Härtergemisch und dem Beschleuniger oder Beschleunigergemisch erhält das zumindest eine Harz als Bindemittel neue funktionelle Eigenschaften. Diese wirken der Adsorption der Partikel des Füllstoffs, welche aufgrund der Besonderheiten des Klärschlamms besteht, entgegen, so dass eine exotherme Reaktion erfolgen kann.

Der Härter oder das Härtergemisch ist vorzugsweise ein Mischhärter, bestehend aus einem MEKP - AAP System. Dabei steht die Abkürzug MEKP für Methyl ethyl ketone peroxide und die Abkürzung AAP steht für Acetylacetonperoxid. Der Beschleuniger oder das Beschleunigergemisch ist vorzugsweise ein Mischbeschleuniger, bestehend aus einem Cobalt - Amin System.

In einer weiteren vorteilhaften Variante ist der Härter beispielsweise ein Peroxid-Härter (z. B. Butanox), oder das Härtergemisch umfasst einen solchen Härter. Der Beschleuniger ist in dieser weiteren vorteilhaften Variante ein Cobaltbeschleuniger oder das Beschleunigergemisch umfasst einen derartigen Cobaltbeschleuniger.

Vorteilhafterweise weisen Formelemente, d. h. Polymerbetonteile, aus dem mittels des erfindungsgemäßen Polymerbetongemischs herzustellenden Polymerbeton eine besonders hohe Beständigkeit gegen hohe Temperaturen, Temperaturschwankungen, Feuchtigkeit und Schädlings- oder Ungezieferbefall auf. Weiterhin sind solche Formelemente aus Polymerbeton, d. h. Polymerbetonteile, resistent gegen Chemikalien, insbesondere gegen salzhaltige oder saure Umgebungsluft oder Niederschlag, und verwitterungsbeständig. Dadurch tritt während des Gebrauchs keinerlei Stabilitätsverlust an den Formelementen, d. h. an den Polymerbetonteilen, auf und die bei herkömmlichen Bauelementen notwendigen periodischen Sanierungsmaßnahmen sind vermieden.

Zum Anmischen des Polymerbetongemischs sind herkömmliche Dosier-Mischmaschinen zu verwenden. Der Anteil des Harzgemischs und/oder die Zusammensetzung des Harzgemischs werden zweckmäßigerweise entsprechend einer jeweils erforderlichen und/oder gewünschten Viskosität, Topfzeit, UV-Beständigkeit und/oder Temperaturbeständigkeit und/oder entsprechend jeweils gewünschter mechanischer Eigenschaften des mittels des Polymerbetongemischs herzustellenden Polymerbetonteils vorgegeben und entsprechend angemischt.

Erfindungsgemäß ist das Füllstoffgemisch aus 77 bis 83 Volumenprozent getrocknetem Klärschlamm gebildet, welchem 17 bis 23 Volumenprozent Quarzmehl zugesetzt sind. Dabei ist ein Mischungsverhältnis zwischen getrocknetem Klärschlamm und Quarzmehl in Abhängigkeit einer chemischen und/oder physikalischen Beschaffenheit oder Zusammensetzung des getrockneten Klärschlamms einstellbar.

Um einen Polymerisations- und Aushärtevorgang des Polymerbetongemischs und dadurch die Ausbildung des Polymerbetons zu ermöglichen, umfasst das Harzgemisch zweckmäßigerweise ein Polyesterharz oder ein Acrylharz.

Ein Mischungsverhältnis zwischen dem Füllstoffgemisch und Harzgemisch des Polymerbetongemischs, d. h. ein Mischungsverhältnis der Komponenten Füllstoff, Harz, Härter oder Härtergemisch und Beschleuniger oder Beschleunigergemisch, ist zweckmäßigerweise in Abhängigkeit einer chemischen und/oder physikalischen Beschaffenheit oder Zusammensetzung des getrockneten Klärschlamms sowie zweckmäßigerweise auch in Abhängigkeit vom jeweils herzustellenden Polymerbetonteil und die an dieses gestellten Anforderungen einstellbar. Je nach Ausgangssituation und Anforderungen an das mittels des Polymerbetongemischs herzustellende Polymerbetonteil sind zweckmäßigerweise zusätzliche Additive und/oder Inhibitoren zuzusetzen.

Bei diesem Zusatz der Additive und/oder Inhibitoren geht es insbesondere um eine Steuerung eines inneren Fließverhaltens des Polymerbetongemischs und/oder des aushärtenden Polymerbetons, beispielsweise durch einen Einsatz von Thixotropiermittel, und/oder um eine Steuerung der Oberflächenspannung des Polymerbetongemischs und/oder des aushärtenden Polymerbetons und/oder um eine Erhöhung des HdT-Wertes, d. h. der Wärmeformbeständigkeit des Polymerbetongemischs und/oder des aushärtenden Polymerbetons, sowie um einen Einsatz von Antischrumpf-Additiven, um ein Schrumpfen oder zumindest ein zu starkes Schrumpfen des Polymerbetongemischs und/oder des aushärtenden Polymerbetongemisch zu verhindern. Zudem ist durch den Zusatz der Additive und/oder Inhibitoren eine UV-Beständigkeit des hergestellten Polymerbetonteils zu verbessern.

Diese Beeinflussung der oben genannten Faktoren wird beispielsweise durch folgende Additive/Inhibitoren erreicht, welche allein oder in einer Kombination mehrerer der nachfolgend genannten Additive/Inhibitoren zugesetzt werden können:
- Reaktivverdünner wie Styrol-Vinyl-Toluol oder Diethylene Glycoldivinyl Ether,
- konjugierte Doppelbindungssysteme wie Benzylidencampher Sulfonsäure, Isopropyl Benzyl Salicylat, 4-Methylbenzylidencampher,
- anorganische Pigmentierung wie Titanoxid in Form eines Rutil- oder Anatas-Typs,
- Polyvinylazetate,
- hochdisperse Kieselsäure, Methylcellulosefasern,
- Polysiloxane.

Um höhere Festigkeiten des Polymerbetons zu erzielen, sind in einer vorteilhaften Ausführungsform in den Füllstoff oder in das Füllstoffgemisch Kunst- und/oder Naturfasern eingebracht. Dabei kann es sich beispielweise um Glasfasern, Bambusfasern, Industriehanf und/oder Flachs handeln. Diese sind in einem im Folgenden näher beschriebenen erfindungsgemäßen Verfahren zur Herstellung eines Polymerbetonteils im Polymerbeton einzubetten. Diese Kunst- und/oder Naturfasern bilden eine Bewehrung für den aus dem Polymerbetongemisch hergestellten Polymerbeton bzw. für das Polymerbetonteil. Dadurch werden mechanische Eigenschaften des Polymerbetons verbessert, beispielsweise eine Biege- und/oder Zugfestigkeit und/oder Steifigkeit.

In einer besonders vorteilhaften Ausführungsform können die Kunst- und/oder Naturfasern zu einem reißfesten Gewebe, beispielsweise einer Matte, verwirkt sein und derart in den Polymerbeton bzw. in das Polymerbetongemisch eingebracht werden.

In einem erfindungsgemäßen Verfahren zur Herstellung eines Polymerbetonteils wird ein oben beschriebenes Polymerbetongemisch durch Mischen von 78 bis 82 Volumenprozent eines Füllstoffgemischs und 18 bis 22 Volumenprozent eines Harzgemisches aus zumindest einem Harz, einem Härter oder Härtergemisch und einem Beschleuniger oder Beschleunigergemisch erzeugt. Dabei beträgt, wie bereits erwähnt, der Anteil des Härters oder Härtergemischs, bezogen auf den Harzanteil, 1,5 bis 2 Volumenprozent, und der Anteil des Beschleunigers oder Beschleunigergemischs, bezogen auf den Harzanteil, beträgt 0,8 bis 1,4 Volumenprozent. D. h. das Harzgemisch aus dem zumindest einen Harz, dem Härter oder Härtergemisch und dem Beschleuniger oder Beschleunigergemisch weist 1,5 bis 2 Volumenprozent des Härters oder Härtergemischs, 0.8 bis 1,4 Volumenprozent des Beschleunigers oder Beschleunigergemischs und entsprechend 96,6 bis 97,7 Volumenprozent Harz auf.

Der Füllstoff oder das Füllstoffgemisch umfasst, wie bereits erwähnt, getrockneten Klärschlamm. Dabei sind unter getrocknetem Klärschlamm Feststoffbestandteile des Klärschlamms zu verstehen, welche nach einer bevorzugt vollständigen Trocknung des Klärschlamms oder nach einer Trocknung des Klärschlamms zumindest bis zu einer vorgegebenen Restfeuchte verbleiben. Dieses Polymerbetongemisch zur Herstellung des Polymerbetonteils wird polymerisiert und ausgehärtet, so dass das Polymerbetonteil aus Polymerbeton ausgebildet wird.

Das Aushärten erfolgt automatisch nach dem Polymerisieren. Dieses Aushärten kann beeinflusst werden, insbesondere durch die Zusammensetzung des Polymerbetongemischs, besonders durch die Zusammensetzung des Harzgemisches, d. h. durch das jeweils verwendete zumindest eine Harz sowie den jeweils verwendeten Härter oder das Härtergemisch und den jeweils verwendeten Beschleuniger oder das Beschleunigergemisch, und deren jeweilige Anteile.

Das erfindungsgemäße Verfahren ermöglicht die oben bereits beschriebenen Vorteile. So kann mittels des erfindungsgemäßen Verfahrens vorteilhafterweise ein herkömmlicherweise aufwendig zu entsorgender Klärschlamm einer Verwendung zugeführt werden. Dadurch entfällt, wie bereits beschrieben, eine aufwendige Aufarbeitung oder chemische Behandlung des Klärschlamms und es ist ein besonders einfach herzustellender Polymerbeton ermöglicht, welcher eine hohe Festigkeit, ein hohes Elastizitätsmodul, eine große chemische und/oder mechanische Widerstandsfähigkeit und/oder -beständigkeit, eine hohe Abriebfestigkeit und keine Wasseraufnahme oder zumindest eine gegen Null gehende Wasseraufnahme aufweist. Dadurch sind die mittels des Verfahrens hergestellten Polymerbetonteile beispielsweise auch in Überschwemmungsgebieten sehr vorteilhaft einsetzbar. Weiterhin ist der mittels des erfindungsgemäßen Verfahrens herzustellende Polymerbeton des Polymerbetonteils besonders korrosions-, alterungs- und witterungsbeständig und nahezu schwundfrei.

Des Weiteren ist durch den Einsatz von getrocknetem Klärschlamm aufgrund dessen Struktur eine Schalldämmung und Wärmeisolierung des Polymerbetons bzw. des daraus hergestellten Polymerbetonteils verbessert, denn aufgrund der Struktur einzelner Partikel des Klärschlamms, welche hohlkörperförmig ausgebildet sind, beispielsweise röhrenförmig, zum Beispiel ähnlich wie dies bei Hanf der Fall ist, ergibt sich im Polymerbeton ein Gefüge, welches wärme- und schallisolierend wirkt. Zudem weist ein aus dem mittels Klärschlamm hergestellten Polymerbeton ausgebildetes Polymerbetonteil ein geringeres Gewicht auf als ein nur mit Quarzsand als Füllstoff hergestelltes Polymerbetonteil. Dies hat beispielsweise Vorteile beim Transport sowie bei der Verarbeitung der Polymerbetonteile, da zum Beispiel keine schweren Maschinen zum deren Transport und Verarbeitung erforderlich sind und bei mittels der Polymerbetonteile herzustellenden Gebäuden oder Gebäudebestandteilen Grundmauern, Bodenplatten und Abstützungen erheblich geringer ausgebildet werden können.

Mittels des erfindungsgemäßen Verfahrens herzustellende Polymerbetonteile weisen eine besonders hohe Beständigkeit gegen hohe Temperaturen, Temperaturschwankungen, Feuchtigkeit und Schädlings- oder Ungezieferbefall auf. Weiterhin sind solche mittels des Verfahrens hergestellten Polymerbetonteile resistent gegen Chemikalien, insbesondere gegen salzhaltige oder saure Umgebungsluft oder Niederschlag, und verwitterungsbeständig. Dadurch tritt während des Gebrauchs keinerlei Stabilitätsverlust an den Polymerbetonteilen auf und die bei herkömmlichen Bauelementen notwendigen periodischen Sanierungsmaßnahmen werden vermieden.

Das Verfahren ist sehr effizient, wirtschaftlich und kostengünstig durchzuführen. Es ist zudem umweltschonend, da der Klärschlamm einer sinnvollen Verwendung zugeführt wird und da gegenüber aus dem Stand der Technik bekannten Verfahren zur Polymerbetonherstellung Kohlenstoffdioxid-Emissionen reduziert sind. Dies wird dadurch erreicht, dass der Beschleuniger oder das Beschleunigergemisch durch eine exotherme Reaktion Wärme für den Polymerisationsvorgang erzeugt. Dadurch ist keine Zuführung von Wärme von außen erforderlich, so dass Kohlenstoffdioxid-Emissionen, welche bei einer Erzeugung von Wärme für eine endotherme Reaktion anfallen würden, vermieden werden. Zudem ist durch die Verarbeitung des Klärschlamms auf die beschriebene Weise keine aufwändige und mit Kohlenstoffdioxid-Emissionen verbundene Aufbereitung und Deponierung des Klärschlamms erforderlich.

Der Härter oder das Härtergemisch ist vorzugsweise ein Mischhärter, bestehend aus einem MEKP - AAP System. Dabei steht die Abkürzug MEKP für Methyl ethyl ketone peroxide und die Abkürzung AAP steht für Acetylacetonperoxid. Der Beschleuniger oder das Beschleunigergemisch ist vorzugsweise ein Mischbeschleuniger, bestehend aus einem Cobalt - Amin System.

In einer weiteren vorteilhaften Variante ist der Härter beispielsweise ein Peroxid-Härter (z. B. Butanox), oder das Härtergemisch umfasst einen solchen Härter. Der Beschleuniger ist in dieser weiteren vorteilhaften Variante ein Cobaltbeschleuniger oder das Beschleunigergemisch umfasst einen derartigen Cobaltbeschleuniger.

Erfindungsgemäß wird das Füllstoffgemisch aus 77 bis 83 Volumenprozent getrocknetem Klärschlamm gebildet, welchem 17 bis 23 Volumenprozent Quarzmehl zugesetzt werden. Dabei wird ein Mischungsverhältnis zwischen getrocknetem Klärschlamm und Quarzmehl in Abhängigkeit einer chemischen und/oder physikalischen Beschaffenheit oder Zusammensetzung des getrockneten Klärschlamms eingestellt.

Um einen Polymerisations- und Aushärtevorgang des Polymerbetongemischs und dadurch die Ausbildung des Polymerbetons zu ermöglichen, umfasst das Harzgemisch vorzugsweise ein Polyesterharz oder ein Acrylharz.

Ein Mischungsverhältnis zwischen dem Füllstoffgemisch und den Zuschlagstoffen des Polymerbetongemischs, d. h. ein Mischungsverhältnis der Komponenten Füllstoff, Harz, Härter oder Härtergemisch und Beschleuniger oder Beschleunigergemisch, wird zweckmäßigerweise in Abhängigkeit einer chemischen und/oder physikalischen Beschaffenheit oder Zusammensetzung des getrockneten Klärschlamms sowie zweckmäßigerweise auch in Abhängigkeit vom jeweils herzustellenden Polymerbetonteil und die an dieses gestellten Anforderungen eingestellt. Je nach Ausgangssituation und Anforderungen an das herzustellende Polymerbetonteil können zweckmäßigerweise zusätzliche Additive und/oder Inhibitoren zugesetzt werden.

Bei diesem Zusatz der Additive und/oder Inhibitoren geht es insbesondere um eine Steuerung eines inneren Fließverhaltens des Polymerbetongemischs und/oder des aushärtenden Polymerbetons, beispielsweise durch einen Einsatz von Thixotropiermittel, und/oder um eine Steuerung der Oberflächenspannung des Polymerbetongemischs und/oder des aushärtenden Polymerbetons und/oder um eine Erhöhung des HdT-Wertes, d. h. der Wärmeformbeständigkeit des Polymerbetongemischs und/oder des aushärtenden Polymerbetons, sowie um einen Einsatz von Antischrumpf-Additiven, um ein Schrumpfen oder zumindest ein zu starkes Schrumpfen des Polymerbetongemischs und/oder des aushärtenden Polymerbetongemisch zu verhindern. Zudem ist durch den Zusatz der Additive und/oder Inhibitoren eine UV-Beständigkeit des hergestellten Polymerbetonteils zu verbessern.

Diese Beeinflussung der oben genannten Faktoren wird beispielsweise durch folgende Additive/Inhibitoren erreicht, welche allein oder in einer Kombination mehrerer der nachfolgend genannten Additive/Inhibitoren zugesetzt werden können:
- Reaktivverdünner wie Styrol-Vinyl-Toluol oder Diethylene Glycoldivinyl Ether,
- konjugierte Doppelbindungssysteme wie Benzylidencampher Sulfonsäure, Isopropyl Benzyl Salicylat, 4-Methylbenzylidencampher,
- anorganische Pigmentierung wie Titanoxid in Form eines Rutil- oder Anatas-Typs,
- Polyvinylazetate,
- hochdisperse Kieselsäure, Methylcellulosefasern,
- Polysiloxane.

Um höhere Festigkeiten des Polymerbetons zu erzielen, werden in den Füllstoff oder in das Füllstoffgemisch vorzugsweise Kunst- und/oder Naturfasern eingebracht. Dabei kann es sich beispielweise um Glasfasern, Bambusfasern, Industriehanf und/oder Flachs handeln. Diese werden im Polymerbeton eingebettet. Diese Kunst- und/oder Naturfasern bilden eine Bewehrung für den Polymerbeton bzw. für das Polymerbetonteil. Dadurch werden mechanische Eigenschaften des Polymerbetons verbessert, beispielsweise eine Biege- und/oder Zugfestigkeit und/oder Steifigkeit.

In einer besonders vorteilhaften Ausführungsform können die Kunst- und/oder Naturfasern zu einem reißfesten Gewebe, beispielsweise einer Matte, verwirkt werden und derart in den Polymerbeton eingebracht werden.

Zweckmäßigerweise wird das Polymerbetongemisch vor dem Polymerisieren und Aushärten in eine Form eingebracht. Dies ermöglicht eine Ausbildung des herzustellenden Polymerbetonteils in einer jeweils gewünschten Ausformung, durch eine vorherige Ausbildung einer entsprechenden Form, in welcher das Polymerbetongemisch zum Polymerisieren und Aushärten einzubringen ist.

Vorteilhafterweise wird auf eine komplette Formoberfläche der Form vor dem Einbringen des Polymerbetongemischs ein Beschichtungsmaterial aufgebracht, d. h. auf die Formoberfläche der Form, an das Polymerbetongemisch nach dem Einbringen in die Form anliegt. Das Beschichtungsmaterial wird vorteilhafterweise in einem zähflüssigen Zustand auf die Formoberfläche der Form aufgetragen, beispielsweise aufgestrichen oder aufgesprüht. Nachdem es etwas angetrocknet und noch elastisch ist, wird das Polymerbetongemisch in die Form eingebracht. Dieses Beschichtungsmaterial ist zweckmäßigerweise aus einem Kunstharz gebildet, üblicherweise aus einem Polyesterharz, genauer gesagt aus einem ungesättigten Polyester, welches mit Kieselsäure angedickt ist. Ein derartiges Beschichtungsmaterial wird auch als Gelcoat bezeichnet. Das Beschichtungsmaterial ist zweckmäßigerweise farblos, kann alternativ aber auch farbig ausgebildet sein. Dadurch wird beispielsweise eine entsprechende farbliche Oberflächengestaltung des Polymerbetonteils ermöglicht. Das Beschichtungsmaterial weist vorteilhafterweise eine hohe Abriebfestigkeit und/oder Verwitterungsbeständigkeit auf und bildet dadurch eine Oberflächenschicht des Polymerbeotonteils mit einer hohen mechanischen und/oder chemischen Beständigkeit, welche nach dem Entformen des Polymerbetonteils am Polymerbeton anhaftet, indem es mit diesem homogen verbunden ist.

Vorzugsweise wird nach einer Antrocknungsphase des sich in der Form befindenden Polymerbetongemischs ein Beschichtungsmaterial auf eine nicht an der Formoberfläche der Form anliegende Oberfläche des Polymerbetongemischs aufgebracht, d. h. auf eine formoffene Seite des sich in der Form befindenden Polymerbetongemischs, welches zum Polymerbeton des herzustellenden Polymerbetonteils polymerisiert und aushärtet. Bei dem Beschichtungsmaterial handelt es sich zweckmäßigerweise um das gleiche Beschichtungsmaterial, welches auf die Formoberfläche aufgebracht wird. Auf diese Weise ist der Polymerbeton vollständig mit dem Beschichtungsmaterial ummantelt. Somit ist jeglicher direkter Kontakt mit dem getrockneten Klärschlamm vermieden, so dass eine besonders hygienische Nutzung des Klärschlamms ermöglicht und insbesondere jeglicher Austritt von Inhaltsstoffen des Klärschlamms aus dem Polymerbeton des Polymerbetonteils verhindert ist.

Ein Polymerisations- und Aushärtevorgang, bei welchem sich aus dem Polymerbetongemisch der Polymerbeton des Polymerbetonteils ausbildet, erfolgt bevorzugter Weise bei Umgebungsdruck. Dadurch kann im Vergleich zu Polymerisations- und Aushärtevorgängen herkömmlichen Polymerbetons der Fertigungsaufwand und der daraus resultierende Energieverbrauch signifikant reduziert werden.

Der Polymerisations- und Aushärtevorgang bei welchem sich aus dem Polymerbetongemisch der Polymerbeton des Polymerbetonteils ausbildet, erfolgt zweckmäßigerweise bei Umgebungstemperatur, so dass der Polymerbeton bzw. das Polymerbetongemisch während des Polymerisations- und Aushärtevorgangs nicht erwärmt oder aufgeheizt werden muss. Dies wird durch den Beschleuniger oder das Beschleunigergemisch, genauer gesagt durch eine von diesem verursachte exotherme Reaktion ermöglicht. Durch den Beschleuniger oder das Beschleunigergemisch erzeugte Wärme wird für den Polymerisationsvorgang genutzt, so dass keine zusätzliche Wärmezufuhr erforderlich ist.

In einer besonders vorteilhaften Ausführungsform des Verfahrens wird der durch das Polymerisieren und Aushärten oder zumindest teilweisen Aushärten des Polymerbetongemischs ausgebildete Polymerbeton nach einem Entformen vollständig mit einem Beschichtungsmaterial ummantelt. Das Entformen kann dabei auch bereits während des Aushärtevorgangs erfolgen, d. h. ein vollständiges Aushärten des Polymerbetons in der Form ist nicht erforderlich. Das Entformen des Polymerbetons, genauer gesagt des aus diesem ausgebildeten Polymerbetonteils, erfolgt dann bereits nach einem teilweisen Aushärten, wenn der Polymerbeton bereits fest genug zum Entformen ist. Das Aushärten geht dann außerhalb der Form weiter, bis der Aushärtevorgang vollständig abgeschlossen ist. Der Auftrag des Beschichtungsmaterials kann beispielsweise durch Besprühen erfolgen. Dabei handelt es sich vorzugsweise um das oben beschriebene, auch als Gelcoat bezeichnete Beschichtungsmaterial. Alternativ kann es sich hierbei ebenfalls um ein Gelcoat handeln, jedoch in einer anderen Zusammensetzung als die oben beschriebene erste Schicht des Beschichtungsmaterials. D. h. es werden dann, wenn beide Schichten aufgetragen werden, für die erste Schicht, welche auf die oben beschriebene Weise über die Form auf das Polymerbetongemisch aufgebracht wird und/oder welche auf die nicht an der Formoberfläche der Form anliegende Oberfläche des Polymerbetongemischs aufgebracht wird, ein erstes Beschichtungsmaterial und für die zweite Schicht, mit welchem der Polymerbeton nach dem Entformen vollständig ummantelt wird, ein zweites Beschichtungsmaterial verwendet.

Diese beiden Beschichtungsmaterialien können jeweils als ein Gelcoat ausgebildet sein, jedoch mit unterschiedlichen Zusammensetzungen. So handelt es sich zweckmäßigerweise bei beiden Beschichtungsmaterialien um ein mit Kieselsäure angedicktes Polyesterharz. Das erste Beschichtungsmaterial enthält des Weiteren vorzugsweise Styrol und Methyl-methacrylat, während das zweite Beschichtungsmaterial vorzugsweise Styrol und Cobalt-(III)-bis(2-ethylhexanoat enthält. Des Weiteren kann das zweite Beschichtungsmaterial beispielsweise zusätzlich Isophthalsäure-Neopentylglycol-basierendes (Iso-NPG) Gelcoat enthalten. Wird diese zweite Schicht nicht verwendet, so kann auch das Beschichtungsmaterial für die erste Schicht bereits zusätzlich dieses Isophthalsäure-Neopentylglycol-basierendes (Iso-NPG) Gelcoat enthalten.

Das Ummanteln des Polymerbetons kann dabei alternativ oder zusätzlich zu dem Aufbringen des Beschichtungsmaterials auf die Formoberfläche und dessen Übertragung auf das anschließend in die Form eingefüllte Polymerbetongemisch und/oder alternativ oder zusätzlich zu dem Aufbringen des Beschichtungsmaterials auf die nicht an der Formoberfläche der Form anliegende Oberfläche des Polymerbetongemischs erfolgen.

In der alternativen Ausführungsform werden dadurch die oben beschriebenen Vorteile erreicht. Insbesondere ist durch das Ummanteln jeglicher direkter Kontakt mit dem getrockneten Klärschlamm vermieden, so dass eine besonders hygienische Nutzung des Klärschlamms ermöglicht und insbesondere jeglicher Austritt von Inhaltsstoffen des Klärschlamms aus dem Polymerbeton des Polymerbetonteils verhindert ist.

Bei der zusätzlichen Ausführungsform ist die Ummantelung entsprechend durch zwei Schichten des Beschichtungsmaterials ausgebildet, wodurch eine besonders sichere und dichte Ummantelung des Polymerbetons sichergestellt ist. Dabei können mit der nach dem Entformen durchgeführten zusätzlichen Ummantelung mit dem Beschichtungsmaterial, welches dann auf die direkt am Polymerbeton anliegende und mit diesem homogen verbundene erste Schicht des Beschichtungsmaterials aufgetragen wird, beispielsweise auch mögliche Fehlstellen der ersten Schicht geschlossen werden. Dadurch ist sichergestellt, dass ein Austritt im Klärschlamm enthaltener schädlicher und/oder giftiger Substanzen aus dem Polymerbeton des Polymerbetonteils verhindert ist.

Bei der zusätzlichen Ummantelung erfolgt der Auftrag des Beschichtungsmaterial zweckmäßigerweise innerhalb eines Zeitfensters, in welchem eine chemische Abbindung des über die Formoberfläche auf den Polymerbeton übertragenen Beschichtungsmaterials und des auf die nicht an der Formoberfläche der Form anliegende Oberfläche des Polymerbetongemischs aufgebrachten Beschichtungsmaterials noch nicht abgeschlossen ist. Auf diese Weise wird eine homogene Verbindung zwischen den beiden Schichten des Beschichtungsmaterials erreicht. Dadurch wird vorteilhafterweise eine homogene Oberflächenschicht ausgebildet. Um dies zu ermöglichen, erfolgt das Entformen zweckmäßigerweise, bevor der Aushärtevorgang vollständig abgeschlossen ist. Dieses Aushärten kann mehrere Stunden oder Tage dauern, wobei der Polymerbeton bereits nach kürzerer Zeit ausreichend ausgehärtet ist, um entformt werden zu können. Auf diese Weise ist wird das oben beschriebene Zeitfenster ermöglicht, innerhalb dessen der Auftrag des Beschichtungsmaterials für die zusätzliche Beschichtung erfolgen sollte, so dass die homogene Verbindung zwischen den beiden Schichten des Beschichtungsmaterials erreicht wird.

Die oberste Schicht des Beschichtungsmaterials wird abhängig von einer jeweils vorgesehenen Verwendung des herzustellenden Polymerbetonteils ausgebildet, so dass diese Schicht die jeweils erforderlichen Eigenschaften aufweist. Zum Beispiel kann diese oberste Schicht besonders abriebfest ausgebildet werden, beispielsweise bei einem als Pflasterstein ausgebildeten Polymerbetonteil, oder sie kann besonders fäkalienfest ausgebildet werden, zum Beispiel bei einem für die Tierhaltung vorgesehenen Polymerbetonteil. Alternativ oder zusätzlich kann diese oberste Schicht beispielsweise farbig und/oder mit einer glänzenden Oberfläche ausgebildet werden.

In das Beschichtungsmaterial zur Ausbildung der Oberflächenschicht, d. h. in das auf die Formoberfläche aufzubringende Beschichtungsmaterial, welches dann auf dem in die Form eingefüllten Polymerbetongemisch bzw. am polymerisierten und ausgehärteten Polymerbeton anhaftet und mit diesem homogen verbunden ist, und/oder in das auf die nicht an der Formoberfläche der Form anliegende Oberfläche des Polymerbetongemischs aufzubringende Beschichtungsmaterial und/oder in das Beschichtungsmaterial, mit welchem der Polymerbeton oder das bereits mit Beschichtungsmaterial beschichtete Formelement nach dem Entformen vollständig ummantelt wird, können organische und/oder anorganische Partikel, insbesondere Farbpartikel, Glassplitter, Kunststoffspäne und/oder -partikel, Metallspäne und/oder Gesteinssplitter, eingebracht werden, so dass eine optisch ansprechende dekorative Oberflächengestaltung des Polymerbetonteils erreicht wird. Dabei erfolgt die Einbettung in das Beschichtungsmaterial zweckmäßigerweise derart, dass die Partikel vom Beschichtungsmaterial fixiert oder gehalten werden und oberflächenseitig vom Beschichtungsmaterial bedeckt werden.

Ein erfindungsgemäßes Polymerbetonteil wird mittels des oben beschriebenen Verfahrens und/oder aus dem oben beschriebenen Polymerbetongemisch hergestellt. Das erfindungsgemäße Polymerbetonteil weist die oben beschriebenen Vorteile auf. So ist durch die Verarbeitung zum erfindungsgemäßen Polymerbetonteil vorteilhafterweise ein herkömmlicherweise aufwendig zu entsorgender Klärschlamm einer Verwendung zuzuführen. Dadurch entfällt, wie bereits beschrieben, eine aufwendige Aufarbeitung oder chemische Behandlung des Klärschlamms und es ist ein besonders einfach herzustellender Polymerbeton ermöglicht, welcher eine hohe Festigkeit, ein hohes Elastizitätsmodul, eine große chemische und/oder mechanische Widerstandsfähigkeit und/oder -beständigkeit, eine hohe Abriebfestigkeit und keine Wasseraufnahme oder zumindest eine gegen Null gehende Wasseraufnahme aufweist. Dadurch sind derartige Polymerbetonteile beispielsweise auch in Überschwemmungsgebieten sehr vorteilhaft einsetzbar.

Weiterhin ist der der Polymerbeton des erfindungsgemäßen Polymerbetonteils besonders korrosions-, alterungs- und witterungsbeständig und nahezu schwundfrei.

Des Weiteren ist durch den Einsatz von getrocknetem Klärschlamm aufgrund dessen Struktur eine Schalldämmung und Wärmeisolierung des Polymerbetons bzw. des daraus hergestellten Polymerbetonteils verbessert, denn aufgrund der Struktur einzelner Partikel des Klärschlamms, welche hohlkörperförmig ausgebildet sind, beispielsweise röhrenförmig, zum Beispiel ähnlich dem Hanf, ergibt sich im Polymerbeton ein Gefüge, welches wärme- und schallisolierend wirkt. Zudem weist ein aus dem mittels Klärschlamm hergestellten Polymerbeton ausgebildetes Polymerbetonteil ein geringeres Gewicht auf als ein nur mit Quarzsand als Füllstoff hergestelltes Polymerbetonteil. Dies hat beispielsweise Vorteile beim Transport sowie bei der Verarbeitung der Polymerbetonteile, da zum Beispiel keine schweren Maschinen zum deren Transport und Verarbeitung erforderlich sind und bei mittels der Polymerbetonteile herzustellenden Gebäuden oder Gebäudebestandteilen Grundmauern, Bodenplatten und Abstützungen erheblich geringer ausgebildet werden können.

Das erfindungsgemäße Polymerbetonteil weist eine besonders hohe Beständigkeit gegen hohe Temperaturen, Temperaturschwankungen, Feuchtigkeit und Schädlings- oder Ungezieferbefall auf. Weiterhin ist das erfindungsgemäße Polymerbetonteil resistent gegen Chemikalien, insbesondere gegen salzhaltige oder saure Umgebungsluft oder Niederschlag, und verwitterungsbeständig. Dadurch tritt während des Gebrauchs keinerlei Stabilitätsverlust am Polymerbetonteil auf und die bei herkömmlichen Bauelementen notwendigen periodischen Sanierungsmaßnahmen werden vermieden.

In einer besonders bevorzugten Ausführungsform ist der Polymerbeton des Polymerbetonteils vollständig von zumindest einer Oberflächenschicht aus einem Beschichtungsmaterial ummantelt. Dieses Beschichtungsmaterial ist zweckmäßigerweise aus einem Kunstharz gebildet, üblicherweise aus einem Polyesterharz, genauer gesagt aus einem ungesättigten Polyester, welches mit Kieselsäure angedickt ist. Ein derartiges Beschichtungsmaterial wird auch als Gelcoat bezeichnet. Das Beschichtungsmaterial ist zweckmäßigerweise farblos, kann alternativ aber auch farbig ausgebildet sein. Dadurch wird beispielsweise eine entsprechende farbliche Oberflächengestaltung ermöglicht. Es weist vorteilhafterweise eine hohe Abriebfestigkeit und/oder Verwitterungsbeständigkeit auf und bildet dadurch eine Oberflächenschicht mit einer hohen mechanischen und/oder chemischen Beständigkeit.

Somit ist eine Oberflächenschicht, welche das aus dem Polymerbeton gebildete Formelement schützend umgibt oder umschließt, mit einer besonders hohen chemischen und/oder mechanischen Beständigkeit ermöglicht. Weiterhin ist somit jeglicher direkter Kontakt mit dem getrockneten Klärschlamm vermieden, so dass eine besonders hygienische Nutzung des Klärschlamms ermöglicht und insbesondere jeglicher Austritt von Inhaltsstoffen des Klärschlamms aus dem Polymerbeton verhindert ist.

In einer vorteilhaften Ausführungsform sind in die Oberflächenschicht, welche bevorzugt aus dem so genannten Gelcoat gebildet ist, organische und/oder anorganische Partikel, insbesondere Farbpartikel, Glassplitter, Metallspäne und/oder Gesteinssplitter, eingebracht, so dass eine optisch ansprechende dekorative Oberflächengestaltung des Polymerbetons des Polymerbetonteils erreicht ist.

Das erfindungsgemäße Polymerbetongemisch und das erfindungsgemäße Verfahren zur Herstellung eines Polymerbetonteils können bevorzugt zur Herstellung von Form-, Struktur- oder Bauelementen zur Verwendung im Innen- und Außenbereich verwendet werden, d. h. das erfindungsgemäße Polymerbetonteil ist bevorzugt als ein solches Form-, Struktur- oder Bauelement zur Verwendung im Innen- und Außenbereich ausgebildet, beispielsweise als Pflasterstein, Gehwegplatte, Fassadenplatte, Fußbodenplatte, Wandverkleidung oder Futtertrog oder Fäkaliengerinne in der Tierhaltung.

Ausführungsbeispiele der Erfindung werden im Folgenden anhand einer Zeichnung näher erläutert.

Darin zeigt:

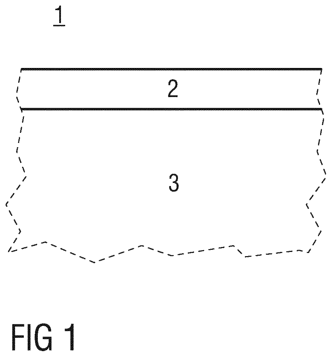

- Figur 1: schematisch eine Schnittdarstellung eines Polymerbetonteils.

**Figur** 1 zeigt schematisch eine Schnittdarstellung eines Polymerbetonteils 1. Ein solches Polymerbetonteil 1 ist aus zumindest zwei Schichten gebildet und umfasst zumindest eine Oberflächenschicht 2 aus einem Beschichtungsmaterial und eine Schicht des Polymerbetons 3. Dabei ist ein Formelement im Wesentlichen aus dem Polymerbeton 3 gebildet, welcher aus dem Polymerbetongemisch gebildet wird. Der Polymerbeton 3 ist oberflächenseitig mit der Oberflächenschicht 2 beschichtet. Diese oberflächenseitige Beschichtung des Polymerbetons 3 umschließt dabei das Formelement vollständig.

In einer alternativen, nicht dargestellten Ausführungsform der Erfindung kann zwischen der Oberflächenschicht 2 und dem Polymerbeton 3 eine zusätzliche Farb- oder Tragschicht angeordnet sein.

Die Oberflächenschicht 2 ist eine Schicht eines farblosen oder farbigen herkömmlichen so genannten Gelcoats mit einer Schichtdicke von vorzugsweise 0,8 bis 1,0 mm. Die Oberflächenschicht 2 weist eine besonders hohe mechanische und/oder chemische Beständigkeit auf und ist beispielweise besonders abriebfest und verwitterungsbeständig. Unter dem Begriff Gelcoat ist ein Beschichtungsmaterial zu verstehen. Dieses Beschichtungsmaterial besteht aus einem Kunstharz, üblicherweise aus einem Polyesterharz, genauer gesagt aus einem ungesättigten Polyester, welches mit Kieselsäure angedickt ist.

In das Gelcoat der Oberflächenschicht 2 können in nicht dargestellten Ausführungsformen organische und/oder anorganische Partikel eingebracht werden, so dass eine optisch ansprechende Oberflächengestaltung des Polymerbetonteils 1 erreicht ist.

Dabei können als Partikel beispielsweise herkömmliche Glassplitter, Gesteinssplitter, Kunststoffspäne oder -partikel und/oder Metallspäne in die Oberflächenschicht 2 eingebettet werden. Dabei erfolgt die Einbettung derart, dass die Partikel vom Gelcoat der Oberflächenschicht 2 fixiert oder gehalten und oberflächenseitig vom Gelcoat bedeckt sind.

Der Polymerbeton 3 wird vom polymerisierten und ausgehärteten Polymerbetongemisch gebildet, welches aus 78 bis 82 Volumenprozent eines Füllstoffs oder eines Füllstoffgemischs und 18 bis 22 Volumenprozent eines Harzgemisches aus zumindest einem Harz, einem Härter oder Härtergemisch und einem Beschleuniger oder Beschleunigergemisch besteht. Dabei beträgt der Anteil des Härters oder Härtergemischs, bezogen auf den Harzanteil, 1,5 bis 2 Volumenprozent, und der Anteil des Beschleunigers oder Beschleunigergemischs, bezogen auf den Harzanteil, beträgt 0,8 bis 1,4 Volumenprozent. D. h. das Harzgemisch aus dem zumindest einen Harz, dem Härter oder Härtergemisch und dem Beschleuniger oder Beschleunigergemisch weist 1,5 bis 2 Volumenprozent des Härters oder Härtergemischs, 0.8 bis 1,4 Volumenprozent des Beschleunigers oder Beschleunigergemischs und entsprechend 96,6 bis 97,7 Volumenprozent Harz auf.

Das Füllstoffgemisch ist aus 77 bis 83 Volumenprozent getrocknetem Klärschlamm gebildet, welchem 17 bis 23 Volumenprozent Quarzmehl zugesetzt sind. Dabei ist ein Mischungsverhältnis zwischen getrocknetem Klärschlamm und Quarzmehl in Abhängigkeit einer chemischen und/oder physikalischen Beschaffenheit oder Zusammensetzung des getrockneten Klärschlamms einstellbar.

Dabei wird als Klärschlamm herkömmlicher Klärschlamm verwendet, welcher bei der Reinigung verschmutzten Wassers jedweder Art anfällt und eine Mischung aus Wasser und Feststoffen ist. Bei den Feststoffen handelt es sich um Schwebstoffe, die sich beispielsweise in der Kläranlage aus dem Wasser absetzen und zu Boden sinken, d. h. sedimentieren. Dabei sind die Schwebstoffe herkömmlichen Abwassers zu einem überwiegenden Anteil aus Fäkalien gebildet, so dass ein solcher Klärschlamm zu einem großen Teil aus Fäkalien besteht.

Zur Herstellung des Polymerbetons 3 wird der Klärschlamm auf eine vorgebbare Korngröße oder genauer gesagt auf eine vorgebbare Partikelgröße zerkleinert, gemahlen und/oder gesiebt und vollständig getrocknet.

Um einen Polymerisations- und Aushärtevorgang des Polymerbetons 3 zu ermöglichen, umfasst das Harzgemisch ein Polyesterharz und/oder ein Acrylharz. Ein Mischungsverhältnis zwischen dem Füllstoffgemisch und den Zuschlagstoffen des Polymerbetons 3, insbesondere Harzgemisch, Härter oder Härtergemisch, Beschleuniger oder Beschleunigergemisch, ist in Abhängigkeit einer chemischen und/oder physikalischen Beschaffenheit oder Zusammensetzung des getrockneten Klärschlamms einstellbar.

Als Härter wird dabei ein herkömmlicher Härter oder ein Gemisch aus einer Mehrzahl von Härtern verwendet, wobei eine chemische Zusammensetzung des Härters an den getrockneten Klärschlamm als Füllstoff oder Füllstoffgemisch angepasst ist.

Als Beschleuniger wird ein herkömmlicher Beschleuniger oder ein Gemisch aus einer Mehrzahl von Beschleunigern verwendet, wobei eine chemische Zusammensetzung des Beschleunigers an den getrockneten Klärschlamm als Füllstoff oder Füllstoffgemisch angepasst ist.

Die Mengenverhältnisse der einzelnen Zuschlagstoffe, also des Harzes, des Härters und des Beschleunigers, werden anhand der zu erzielenden chemischphysikalischen Eigenschaften des herzustellenden Polymerbetons 3, des geforderten Abbindeverhaltens und in Abhängigkeit der chemischen und/oder physikalischen Beschaffenheit oder Zusammensetzung des getrockneten Klärschlamms als Füllstoff eingestellt.

Um höhere Festigkeiten des Polymerbetons 3 zu erzielen, sind in den Füllstoff oder in das Füllstoffgemisch als Bewehrungsmaterial Kunst- und/oder Naturfasern einbringbar. Dabei kann es sich beispielweise um Glasfasern, Bambusfasern, Industriehanf und/oder Flachs handeln.

In einer besonders vorteilhaften Ausführungsform können die Kunst- und/oder Naturfasern zu einem reißfesten Gewebe, beispielsweise einer Matte, verwirkt sein und derart in den Polymerbeton 3 bzw. in das Polymerbetongemisch eingebracht werden.

In das Gelcoat sind vorteilhafterweise Farbpigmente und/oder Farbstoffe gleich verteilt oder in Form eines Musters oder einer Marmorierung einbringbar. Somit sind Polymerbetonteile 1 aus Polymerbeton 3 auf einfache Weise in allen Farben und Mustern oder Marmorierungen herstellbar.

Zur Herstellung eines Polymerbetonteils 1 wird eine entsprechende Form mit einer Schicht eines Gelcoats versehen, welche die Oberflächenschicht 2 bildet. Nach einer Antrocknungsphase des Gelcoats, d. h. wenn eine feste Oberflächenschicht 2 ausgebildet ist, werden alle Zuschlagstoffe des Polymerbetons 3 auf herkömmliche Weise vermischt und in die Form gegossen. Nach einer Antrocknungsphase des Polymerbetons 3 wird der Polymerbeton 3 des Polymerbetongemisches oberseitig mit Gelcoat versehen, so dass der Polymerbeton 3 allseitig mit Gelcoat umschlossen ist.

Somit ist eine Oberflächenschicht 2 mit einer besonders hohen chemischen und/oder mechanischen Beständigkeit ermöglicht, welche das aus dem Polymerbeton 3 gebildete Formelement schützend umgibt oder umschließt. Auf diese Weise wird ein Polymerbetonteil 1 ausgebildet, welches eine Schutzhülle aus dem Gelcoat aufweist, die den Polymerbeton 3 des Polymerbetonteils 1 schützend umgibt oder umschließt. Weiterhin ist somit jeglicher direkter Kontakt mit dem getrockneten Klärschlamm vermieden, so dass eine besonders hygienische Nutzung des Klärschlamms ermöglicht und insbesondere jeglicher Austritt von Inhaltsstoffen des Klärschlamms aus dem Polymerbeton 3 verhindert ist.

Ein anschließender Polymerisations- und Aushärtevorgang des Polymerbetons 3 erfolgt bevorzugter Weise bei Umgebungsdruck und bei Umgebungstemperatur, so dass jegliche energieintensive Erwärmung und/oder Druckerhöhung während des Polymerisations- und Aushärtevorgangs vermieden ist.

Nach dem Polymerisations- und Aushärtevorgang kann das Formelement in herkömmlicher Weise aus der Form entformt werden. Danach kann ein nochmaliges vollständiges Ummanteln mit einem Beschichtungsmaterial erfolgen, bei welchem es sich um das oben beschriebene Gelcoat oder um ein anderes Beschichtungsmaterial, beispielsweise um ein Gelcoat mit einer anderen Zsammensetzung handeln kann. Die Oberflächenschicht 2 ist dann aus zwei Schichten gebildet, aus dem auf die oben beschriebene Weise aufgebrachten Gelcoat und dem nach dem Entformen aufgebrachten Beschichtungsmaterial. Dabei erfolgt das Aufbringen des Beschichtungsmaterials nach dem Entformen zweckmäßigerweise in einem Zeitfenster, in welchem eine chemische Abbindung der ersten Schicht des Gelcoats noch nicht abgeschlossen ist. Auf diese Weise wird eine homogene Verbindung zwischen den beiden Schichten des Beschichtungsmaterials erreicht. Dadurch wird eine homogene Oberflächenschicht 2 ausgebildet. Das Entformen erfolgt daher zweckmäßigerweise bereits, bevor der Polymerbeton 3 vollständig ausgehärtet ist. D. h. das Entformen erfolgt, wenn der Polymerbeton ausreichend ausgehärtet und dadurch ausreichend stabil ist, um ihn zu entformen. Er ist dann teilweise, jedoch noch nicht vollständig ausgehärtet. Das geht dann nach dem Entformen weiter, bis es vollständig abgeschlossen ist.

Der Polymerbeton 3 bzw. das Polymerbetongemisch und das Verfahren können bevorzugt zur Herstellung von Form-, Struktur- oder Bauelementen zur Verwendung im Innen- und Außenbereich verwendet werden. Beispielsweise sind Pflastersteine, Gehwegplatten, Fassadenplatten, Fußbodenplatten und Wandverkleidungen bis hin zu Futtertrögen oder Fäkaliengerinnen in der Tierhaltung als derartige Polymerbetonteile 1 herstellbar.

### BEZUGSZEICHENLISTE

- 1: Polymerbetonteil
- 2: Oberflächenschicht
- 3: Polymerbeton

## Patentansprüche

1. Polymerbetongemisch zur Herstellung eines Polymerbetonteils (1),
wobei das Polymerbetongemisch aus 78 bis 82 Volumenprozent eines Füllstoffgemischs und 18 bis 22 Volumenprozent eines Harzgemisches aus zumindest einem Harz, einem Härter oder Härtergemisch und einem Beschleuniger oder Beschleunigergemisch besteht, wobei das Harzgemisch 1,5 bis 2 Volumenprozent Härter oder Härtergemisch und 0,8 bis 1,4 Volumenprozent Beschleuniger oder Beschleunigergemisch aufweist und wobei das Füllstoffgemisch aus 77 bis 83 Volumenprozent getrocknetem Klärschlamm gebildet ist, welchem 17 bis 23 Volumenprozent Quarzmehl zugesetzt sind, wobei der Klärschlamm vollständig getrocknet ist.

2. Polymerbetongemisch nach Anspruch 1,
**dadurch gekennzeichnet, dass** das Harzgemisch ein Polyesterharz oder ein Acrylharz umfasst.

3. Polymerbetongemisch nach einem der vorherigen Ansprüche,
**dadurch gekennzeichnet, dass** in den Füllstoff oder in das Füllstoffgemisch Kunst- und/oder Naturfasern eingebracht sind.

4. Verfahren zur Herstellung eines Polymerbetonteils (1), wobei ein Polymerbetongemisch nach einem der Ansprüche 1 bis 3 durch Mischen von 78 bis 82 Volumenprozent eines Füllstoffgemischs und 18 bis 22 Volumenprozent eines Harzgemisches aus zumindest einem Harz, einem Härter oder Härtergemisch und einem Beschleuniger oder Beschleunigergemisch, wobei das Harzgemisch 1,5 bis 2 Volumenprozent Härter oder Härtergemisch und 0,8 bis 1,4 Volumenprozent Beschleuniger oder Beschleunigergemisch aufweist und wobei das Füllstoffgemisch aus 77 bis 83 Volumenprozent getrocknetem Klärschlamm gebildet ist, welchem 17 bis 23 Volumenprozent Quarzmehl zugesetzt sind, wobei der Klärschlamm vollständig getrocknet ist, erzeugt wird, wobei das Polymerbetongemisch polymerisiert und ausgehärtet wird.

5. Verfahren nach Anspruch 4,
**dadurch gekennzeichnet, dass** das Polymerbetongemisch vor dem Polymerisieren und Aushärten in eine Form eingebracht wird.

6. Verfahren nach Anspruch 5,
**dadurch gekennzeichnet, dass** auf eine komplette Formoberfläche der Form vor dem Einbringen des Polymerbetongemischs ein Beschichtungsmaterial aufgebracht wird.

7. Verfahren nach Anspruch 5 oder 6,
**dadurch gekennzeichnet, dass** nach einer Antrocknungsphase des sich in der Form befindenden Polymerbetongemischs ein Beschichtungsmaterial auf eine nicht an der Formoberfläche der Form anliegende Oberfläche des Polymerbetongemischs aufgebracht wird.

8. Verfahren nach einem der Ansprüche 4 bis 7,
**dadurch gekennzeichnet, dass** der Polymerisations- und Aushärtevorgang bei Umgebungsdruck erfolgt.

9. Verfahren nach einem der Ansprüche 4 bis 8,
**dadurch gekennzeichnet, dass** der Polymerisations- und Aushärtevorgang bei Umgebungstemperatur erfolgt.

10. Verfahren nach einem der Ansprüche 5 bis 9,
**dadurch gekennzeichnet, dass** ein durch das Polymerisieren und Aushärten des Polymerbetongemischs ausgebildeter Polymerbeton (3) nach einem Entformen vollständig mit einem Beschichtungsmaterial ummantelt wird.

11. Polymerbetonteil (1), hergestellt mittels eines Verfahrens nach einem der Ansprüche 4 bis 10 und/oder hergestellt aus einem Polymerbetongemisch nach einem der Ansprüche 1 bis 3.

12. Polymerbetonteil (1) nach Anspruch 11,
**dadurch gekennzeichnet, dass** ein Polymerbeton des Polymerbetonteils (1) vollständig von zumindest einer Oberflächenschicht (2) aus einem Beschichtungsmaterial ummantelt ist.

13. Polymerbetonteil (1) nach Anspruch 12,
**dadurch gekennzeichnet, dass** in die Oberflächenschicht (2) organische und/oder anorganische Partikel eingebracht sind.

## Claims

1. Polymer concrete mixture for the preparation of a polymer concrete part (1), wherein the polymer concrete mixture consists of 78 to 82 percent by volume of a filler mixture and 18 to 22 percent by volume of a resin mixture consisting of at least one resin, a hardener or hardener mixture and an accelerator or accelerator mixture, wherein the resin mixture comprises 1.5 to 2 percent by volume hardener or hardener mixture and 0.8 to 1.4 percent by volume accelerator or accelerator mixture and wherein the filler mixture is formed from 77 to 83 percent by volume dried sludge to which 17 to 23 percent by volume quartz flour has been added, wherein the sludge has been completely dried.

2. Polymer concrete mixture according to Claim 1, **characterized in that** the resin mixture comprises a polyester resin or an acrylic resin.

3. Polymer concrete mixture according to either of the preceding claims, **characterized in that** synthetic and/or natural fibres are introduced into the filler or filler mixture.

4. Process for producing a polymer concrete part (1), wherein a polymer concrete mixture according to any of Claims 1 to 3 is produced by mixing 78 to 82 percent by volume of a filler mixture and 18 to 22 percent by volume of a resin mixture composed of at least one resin, a hardener or hardener mixture and an accelerator or accelerator mixture, wherein the resin mixture comprises 1.5 to 2 percent by volume hardener or hardener mixture and 0.8 to 1.4 percent by volume accelerator or accelerator mixture and wherein the filler mixture is formed from 77 to 83 percent by volume dried sludge to which 17 to 23 percent by volume quartz flour has been added, wherein the sludge has been completely dried, wherein the polymer concrete mixture is polymerized and cured.

5. Process according to Claim 4, **characterized in that** the polymer concrete mixture is introduced into a mould prior to the polymerization and curing.

6. Process according to Claim 5, **characterized in that** a coating material is applied to a complete mould surface of the mould prior to the introduction of the polymer concrete mixture.

7. Process according to Claim 5 or 6, **characterized in that** after a drying phase of the polymer concrete mixture in the mould, a coating material is applied to a surface of the polymer concrete mixture that is not adjacent to the mould surface of the mould.

8. Process according to any of Claims 4 to 7, **characterized in that** the polymerization and curing process is effected at ambient pressure.

9. Process according to any of Claims 4 to 8, **characterized in that** the polymerization and curing process is effected at ambient temperature.

10. Process according to any of Claims 5 to 9, **characterized in that** polymer concrete (3) formed by polymerization and curing of the polymer concrete mixture is completely coated with a coating material after demoulding.

11. Polymer concrete part (1), produced by a process according to any of Claims 4 to 10 and/or produced from a polymer concrete mixture according to any of Claims 1 to 3.

12. Polymer concrete part (1) according to Claim 11, **characterized in that** polymer concrete of the polymer concrete part (1) is completely coated by at least one surface layer (2) of a coating material.

13. Polymer concrete part (1) according to Claim 12, **characterized in that** organic and/or inorganic particles are introduced into the surface layer (2) .

## Revendications

1. Mélange de béton polymère pour la fabrication d'une pièce en béton polymère (1), le mélange de béton polymère étant constitué par 78 à 82 pour cent en volume d'un mélange de charges et 18 à 22 pour cent en volume d'un mélange de résines constitué par au moins une résine, un agent de durcissement ou un mélange d'agents de durcissement et un accélérateur ou un mélange d'accélérateurs, le mélange de résine comprenant 1,5 à 2 pour cent en volume d'agent de durcissement ou de mélange d'agents de durcissement, et 0,8 à 1,4 pour cent en volume d'accélérateur ou de mélange d'accélérateurs, et le mélange de charges étant formé par 77 à 83 pour cent en volume de boues d'épuration séchées, auxquelles 17 à 23 pour cent en volume de farine de quartz est ajoutée, les boues d'épuration étant entièrement séchées.

2. Mélange de béton polymère selon la revendication 1, **caractérisé en ce que** le mélange de résines comprend une résine de polyester ou une résine acrylique.

3. Mélange de béton polymère selon l'une quelconque des revendications précédentes, **caractérisé en ce que** des fibres artificielles et/ou naturelles sont introduites dans la charge ou dans le mélange de charges.

4. Procédé de fabrication d'une pièce en béton polymère (1), selon lequel un mélange de béton polymère selon l'une quelconque des revendications 1 à 3 est formé par mélange de 78 à 82 pour cent en volume d'un mélange de charges et 18 à 22 pour cent en volume d'un mélange de résines constitué par au moins une résine, un agent de durcissement ou un mélange d'agents de durcissement et un accélérateur ou un mélange d'accélérateurs, le mélange de résine comprenant 1,5 à 2 pour cent en volume d'agent de durcissement ou de mélange d'agents de durcissement, et 0,8 à 1,4 pour cent en volume d'accélérateur ou de mélange d'accélérateurs, et le mélange de charges étant formé par 77 à 83 pour cent en volume de boues d'épuration séchées, auxquelles 17 à 23 pour cent en volume de farine de quartz est ajoutée, les boues d'épuration étant entièrement séchées, le mélange de béton polymère est polymérisé et durci.

5. Procédé selon la revendication 4, **caractérisé en ce que** le mélange de béton polymère est introduit dans un moule avant la polymérisation et le durcissement.

6. Procédé selon la revendication 5, **caractérisé en ce qu'**un matériau de revêtement est appliqué sur une surface de moulage complète du moule avant l'introduction du mélange de béton polymère.

7. Procédé selon la revendication 5 ou 6, **caractérisé en ce qu'**après une phase de séchage partiel du mélange de béton polymère qui se trouve dans le moule, un matériau de revêtement est appliqué sur une surface du mélange de béton polymère non adjacente à la surface de moulage du moule.

8. Procédé selon l'une quelconque des revendications 4 à 7, **caractérisé en ce que** le processus de polymérisation et de durcissement a lieu à la pression ambiante.

9. Procédé selon l'une quelconque des revendications 4 à 8, **caractérisé en ce que** le processus de polymérisation et de durcissement a lieu à la température ambiante.

10. Procédé selon l'une quelconque des revendications 5 à 9, **caractérisé en ce qu'**un béton polymère (3) formé par la polymérisation et le durcissement du mélange de béton polymère est entièrement enrobé avec un matériau de revêtement après un démoulage.

11. Pièce en béton polymère (1), fabriquée au moyen d'un procédé selon l'une quelconque des revendications 4 à 10 et/ou fabriquée à partir d'un mélange de béton polymère selon l'une quelconque des revendications 1 à 3.

12. Pièce en béton polymère (1) selon la revendication 11, **caractérisée en ce qu'**un béton polymère de la pièce en béton polymère (1) est entièrement enrobé par au moins une couche de surface (2) en un matériau de revêtement.

13. Pièce en béton polymère (1) selon la revendication 12, **caractérisée en ce que** des particules organiques et/ou inorganiques sont introduites dans la couche de surface (2).
